(19) Europäisches Patentamt
European Patent Office
Office européen des brevets

(11) **EP 3 998 146 B1**

(12) **EUROPEAN PATENT SPECIFICATION**

(45) Date of publication and mention
of the grant of the patent:
**07.05.2025 Bulletin 2025/19**

(21) Application number: **20836891.0**

(22) Date of filing: **10.07.2020**

(51) International Patent Classification (IPC):
*B29C 35/02* (2006.01)    *B29C 35/08* (2006.01)
*B29C 39/02* (2006.01)    *C08J 3/24* (2006.01)
*H01F 1/37* (2006.01)    *C08G 18/67* (2006.01)
*C08K 3/22* (2006.01)    *C08L 75/16* (2006.01)
*H02K 1/04* (2006.01)    *H02K 3/30* (2006.01)
*H02K 15/10* (2025.01)    *H02K 3/32* (2006.01)
*H01F 41/02* (2006.01)    *B29C 70/88* (2006.01)
*B29K 63/00* (2006.01)    *C08K 9/04* (2006.01)
*C08K 9/06* (2006.01)    *C09D 133/08* (2006.01)

(52) Cooperative Patent Classification (CPC):
(C-Sets available)
**C08G 18/672; B29C 35/0272; B29C 35/0288;
B29C 35/0805; B29C 39/028; C08J 3/247;
C08K 3/22; C08L 75/16; H01F 1/37; H01F 41/0246;
H02K 1/04; H02K 3/30; H02K 3/32; H02K 15/10;**
B29C 70/88;       (Cont.)

(86) International application number:
**PCT/KR2020/009122**

(87) International publication number:
**WO 2021/006703 (14.01.2021 Gazette 2021/02)**

(54) **RESIN-FILLED OBJECT, AND METHOD FOR PRODUCING SAME**

MIT HARZ GEFÜLLTER GEGENSTAND UND VERFAHREN ZU SEINER HERSTELLUNG

OBJET CHARGÉ DE RÉSINE ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.07.2019 KR 20190083975
02.12.2019 KR 20190158213
02.12.2019 KR 20190158214**

(43) Date of publication of application:
**18.05.2022 Bulletin 2022/20**

(73) Proprietor: **LG Chem, Ltd.
Seoul 07336 (KR)**

(72) Inventors:
• **AHN, Sang Bum**
**Daejeon 34122 (KR)**
• **LEE, Jin Kyu**
**Daejeon 34122 (KR)**
• **KIM, Kwang Hwan**
**Daejeon 34122 (KR)**

(74) Representative: **Goddar, Heinz J.
Boehmert & Boehmert
Anwaltspartnerschaft mbB
Pettenkoferstrasse 22
80336 München (DE)**

(56) References cited:
GB-A- 470 932     KR-A- 20120 019 651
KR-A- 20160 108 520     KR-A- 20160 131 954
KR-A- 20170 093 696     KR-B1- 101 518 402
US-A1- 2018 264 685     US-A1- 2019 040 248

(52) Cooperative Patent Classification (CPC): (Cont.)
B29C 2035/0811; B29K 2063/00; B29K 2995/0008;
C08J 2363/02; C08K 9/04; C08K 9/06;
C08K 2003/2275; C08K 2201/003; C08K 2201/01;
C09D 133/08

C-Sets
**C08K 3/22, C08L 63/00**

## Description

### Technical Field

This application claims the benefits of the filing dates of Korean Patent Application No. 10-2019-0083975 filed with the Korean Intellectual Property Office on July 11, 2019, Korean Patent Application No. 10-2019-0158213 filed with the Korean Intellectual Property Office on December 2, 2019 and Korean Patent Application No. 10-2019-0158214 filed with the Korean Intellectual Property Office on December 2, 2019.

The present application relates to a resin-filled object according to claim 13 and a method according to claim 1 for producing the same.

### Background Art

A curable resin can be applied to various applications. The curable resin may be applied, for example, to the formation of various adhesives or pressure-sensitive adhesives, the formation of inks for 3D printing or engineering plastics, and the like. In addition, the curable resin can be used in the formation of an insulating material such as an insulating coating liquid, an insulating coating for a motor or bearing, or an insulating sealing material. Besides, the curable resin can also be used for insulation of transformers, generators, alternators, and the like.

As a method of curing a so-called thermosetting resin of the curable resins that is particularly cured by heat, for example, a method of applying heat from the outside is applied. The example thereof may include a method of using hot air or a hot plate.

However, in the case of the above method, there is a problem that the external heat cannot be sufficiently transferred to the inside of the composition, resulting in inhomogeneous curing, and when an excessive amount of heat is required for complete curing, there is also a problem that the resin and the like can be damaged. In addition, in the case of the above method, there is also a problem that the curing time is very long. In order to solve the problems of the above method, a method of applying relatively low temperature heat thereto has been considered, but it is not cured sufficiently and thus it is naturally cured during storage or transportation, whereby there is also a problem that its physical properties (for example, insulation properties and heat resistance characteristics, etc.) cannot be kept constant. Then, in order to solve the problem of the above method, a method of increasing the size of the heat application facility had been considered, but there was still a problem that the cost increased in the process of increasing the size of the facility, and the curing efficiency was not good compared to the enlarged size.

Accordingly, a method of irradiating the curable resin with light such as ultraviolet rays to cure it had been considered. In this method, rapid curing was possible, but the curing was performed smoothly only from the outside, resulting in inhomogeneous curing of the resin, and the curable resin inside remained. Therefore, this method still included the problem of requiring additional heat treatment.

In addition, a method of applying a curable resin on a metal base material and applying an electromagnetic field thereto to inductively heat the metal base material by the electromagnetic field had been considered. However, in this method, there were also problems that it is difficult to control the degree of heating; when two or more metal base materials are applied, heat conduction, expansion, or contraction is caused between the metal base materials; and the cure degree difference in the resin of the portion adjacent to the base material and the portion separated therefrom is large.

In addition, a method of irradiating the curable resin with infrared rays to cure it had also been considered. However, this method still does not solve the problems of the method of applying hot air or a hot plate as described above.

### Disclosure

### Technical Problem

The present application is intended to provide a method that a curable resin can be filled at a high filling rate even in a filling part having a narrow area.

The present application is intended to provide a method that a resin can be filled even in a filling part having a narrow area so as to have excellent hardness and simultaneously have excellent insulating characteristics.

The present application is intended to provide a method that the above filling can be performed in a short time.

The present application is intended to provide a resin-filled object having a resin filled at an excellent filling rate even in a filling part having a narrow area, while having excellent hardness and insulating characteristics.

### Technical Solution

One aspect of the present application relates to a method for producing a resin-filled object. Here, the resin-filled object comprises at least an object having at least a filling space, and a resin component filled in the filling space of the object. As described below, in the method of the present application, since a curable resin can be applied as the resin, the resin component in the resin-filled object may mean a resin in a cured state.

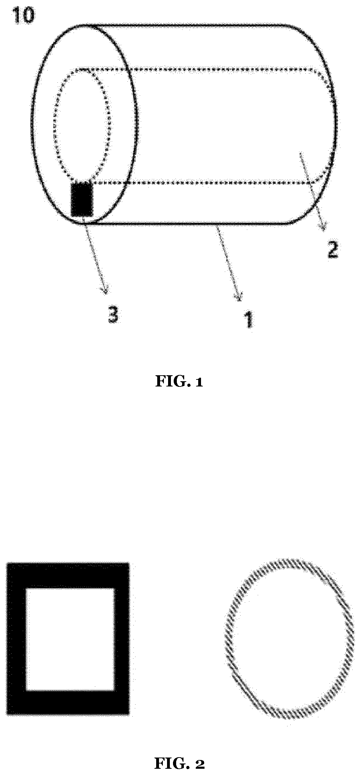

In the method of the present application, a resin-filled object is produced using a production apparatus. Specifically, in the method of the present application, a production apparatus comprising a tubular object (see Figure 1) is used. The tubular object (10) comprises at least a penetration space (2) and an edge region (1). Specifically, in the tubular object, the penetration space is formed in the longitudinal direction. The edge region has slots (3) therein. In addition, the slots are formed in the longitudinal direction inside the edge region. The resin-filled object produced by the method of the present application comprises a resin component filled in the slots.

In the present application, the longitudinal direction (machine direction) of any member may mean a direction where the length is longer among directions of a plane parallel to a plane having the largest area in the member. In addition, the transverse direction of any member may mean a direction perpendicular to the longitudinal direction within the plane directions. In addition, the thickness direction of any member may mean a normal direction of a plane formed by the axes of the longitudinal direction and the transverse direction.

In the present application, the term such as vertical, horizontal, orthogonal or parallel among terms defining an angle means substantially vertical, horizontal, orthogonal or parallel in the range without impairing intended effects, and the range of vertical, horizontal, orthogonal or parallel includes an error such as a production error or a deviation (variation). For example, each case of the foregoing may include an error within about $\pm 15$ degrees, an error within about $\pm 10$ degrees or an error within about $\pm 5$ degrees.

In one example, the cross-sectional shape of the edge region is not particularly limited, but may be, for example, a ring shape (circle), an ellipse shape, a polygonal shape of a triangle or more, or an amorphous shape, and the like. Meanwhile, when considering the transmission efficiency of the magnetic field generated by a solenoid coil to be described below, it may be appropriate that the shape is a ring shape. Here, the cross-sectional shape of the edge region may mean the shape of the cutting plane of the tubular object in the width direction (the cutting plane when the tubular object has been cut along any one direction perpendicular to the longitudinal direction).

The size of the tubular object is also not particularly limited. For example, when the cross-sectional shape of the tubular object at the edge region is a ring shape, its inner diameter may be in a range of 50 mm to 150 mm. Also, when the cross-sectional shape of the tubular object at the edge region is a ring shape, its outer diameter may be in a range of 100 mm to 250 mm (of course, the outer diameter is larger than the inner diameter). Then, when the cross-sectional shape of the tubular object at the edge region is a ring shape, its length may be in a range of 60 mm to 200 mm. In addition, when the cross-sectional shape of the tubular object at the edge region is a ring shape, the length of the penetration space may also be shortened in a direction where the length of the tubular object faces the center, wherein the range of the length may be in the range of 50 mm to 200 mm.

In one example, the production apparatus may further comprise a means capable of fixing, transferring or rotating the tubular object together with the tubular object. The constitution of the means is not particularly limited, and articles of various materials or shapes, and the like capable of implementing the above functions may be applied. By providing the above means, the application of a magnetic field to be described below can be uniformly performed. In particular, when the precursor of the cured resin material, for example, the resin composition or the like is in a liquid phase, there is also an advantage that the means capable of rotating the tubular object can prevent the composition from flowing out of the injected slots through rotation.

The production apparatus further comprises a solenoid coil together with the tubular object. The solenoid coil is inserted into the tubular penetration space and formed so that a magnetic field can be generated. In the present application, a solenoid coil having a generally known shape may be applied. For example, as the solenoid coil, a coil in a form in which a conductor wire formed of copper or the like is wound in a cylindrical shape may also be applied, and a coil in a form in which a cylindrical rod composed of ferromagnetic metal is wound with a conductor wire may also be applied. The tubular object may be inductively heated by the magnetic field formed by the solenoid coil. In addition, as described below, when a component comprising magnetic powder, like the resin composition applied in the method of the present application, is injected into the slots of the tubular object, the magnetic powder may also be inductively heated by the magnetic field formed by the solenoid coil.

The production apparatus of the present application may comprise a magnetic field generator formed so that an alternating current can be applied to the solenoid coil, together with the tubular object. That is, the alternating current applied by the magnetic field generator allows the solenoid coil to generate a magnetic field, and the magnetic field thus formed can inductively heat the tubular object, in some cases, the tubular object and the magnetic powder in the resin composition.

In the present application, as a device configuration such as the fixing means, one known in the art may be applied as it is, as long as it is an element capable of implementing the function.

In addition to the above-described means, solenoid coil and magnetic field generator, the production apparatus of the present application may further comprise known means necessary for other device configurations. The other means can be exemplified by, for example, a temperature control part for sensing a temperature in a tubular object or a penetration space; a resin supply part for supplying a curable resin or the like to the slots; an integrated control part for sensing and controlling the overall driving, and the like.

The method of the present application comprises a step of introducing (or injecting) a resin composition into the tubular object. Specifically, the method comprises a step of introducing a resin composition into the slots of the tubular object. The resin composition comprises a resin and a magnetic powder. In addition, the method of the present application comprises a step of inserting a solenoid coil into the penetration space of the tubular object that the resin composition is introduced into the slots. Subsequently, the method of the present application comprises a step of curing the resin in the composition in a state where the solenoid coil is inserted in the penetration space, by generating a magnetic field with the solenoid coil. Specifically, the tubular object may be inductively heated by the magnetic field generated by the solenoid coil. Furthermore, the magnetic powder of the resin composition can also generate heat by the magnetic field, so that the resin can be cured using the heat. The magnetic powder may be designed so that the heat is not generated by a so-called eddy current or hysteresis loss, but vibrational heat can be generated by the small hysteresis loss of the powder itself and the substantial presence of only the saturation magnetization value. Specifically, when the magnetic field is applied as above, the magnetic powder vibrates due to its coercive force, and as a result, can release heat.

The resin composition supplied to the slots of the tubular object comprises at least a resin and a magnetic powder. Here, the resin may be a curable resin. Therefore, the composition supplied to the slots may be a curable resin composition. Here, the curable resin means a resin that can be cured by application of heat or irradiation of light. In addition, the magnetic powder means fine-sized particles that can vibrate, when a magnetic field or the like is applied thereto, to generate Joule heat. That is, the magnetic powder may generate heat by the magnetic field generated by the solenoid coil. In addition, as the resin is cured by the heat generation of the magnetic powder, the slots of the tubular object can be filled.

Usually, the slots in the tubular object has a narrow area and the inner space thereof is also narrow. However, in the production method of the present application, the above-described device is used and the resin is cured in the slots by the magnetic field applied to the device and filled therein, so that the resin can be filled at an excellent filling rate even in the narrow and tight slots as described above.

In one example, the curing of the resin composition, specifically, the resin in the composition may be performed by applying a magnetic field within a predetermined range to the tubular object and the resin composition with the solenoid coil. The magnetic field applied in the curing step of the resin composition may be a magnetic field generated by an alternating current applied to a solenoid coil in a magnetic field generator to be described below.

In the method of the present application, the conditions for curing the resin composition are not particularly limited, which may be appropriately adjusted so that the resin composition can be cured within a short period of time to form a resin-filled object having an excellent resin filling rate and cure degree, and having excellent heat transfer characteristics and the like, as described below.

For example, the curing of the resin composition can be performed by applying a current of 100 A or more. In another example, the current may be approximately 105 A or more, 110 A or more, 115 A or more, 120 A or more, or 125 A or more, and the upper limit thereof is not particularly limited, which may be appropriately adjusted in a line where the resin is not overheated, and may be, for example, 500 A or less, 400 A or less, 350 A or less, 300 A or less, 250 A or less, 200 A or less, or 150 A or less.

In addition, the curing of the resin composition may be performed with a power of 5000 W or more. The output may mean a power of a magnetic field generator to be described below. In another example, the power may be 5500 W or more, 6000 W or more, 6500 W or more, 7000 W or more, 7500 W or more, or 8000 W or more, and the upper limit is not particularly limited, which may be appropriately adjusted in a line where the resin is overheated, and may be, for example, 10000 W or less, 9500 W or less, 9000 W or less, or 8500 W or less.

In one example, the curing of the resin composition may be performed by applying a current at a frequency in a range of 100 kHz to 1000 kHz. The frequency may be 110 kHz or more, 120 kHz or more, 130 kHz or more, 140 kHz or more, or 150 kHz or more, and may be 950 kHz or less, 900 kHz or less, 850 kHz or less, 800 kHz or less, 750 kHz or less, 700 kHz or less, 650 kHz or less, or 600 kHz or less.

In one example, the curing of the resin composition may be performed for a time of no more than 30 minutes. That is, the method of the present application can rapidly produce the resin-filled object by applying the above production apparatus and the resin composition. In another example, the curing time may be 25 minutes or less, 20 minutes or less, 15 minutes or less, or 10 minutes or less, and the lower limit is not particularly limited, where the lower the value is, the better it is, but it may be, for example, 10 seconds or more, 20 seconds or more, 30 seconds or more, 40 seconds or more, 50 seconds or more, or 60 seconds or more.

The method for producing a resin-filled object of the present application may further comprise a preheating step of preheating the tubular object before introducing the resin composition into the slots. The preheating may be performed by generating a magnetic field in a state where a solenoid coil is inserted in the penetration space of the tubular object. The magnetic field thus applied can inductively heat the tubular object, and accordingly, the resin composition can be more efficiently introduced into the slots of the heated tubular object. Specifically, the inductively heated tubular object reduces the viscosity of the resin composition, whereby the composition can be better filled in the slots.

In one example, the preheating is performed such that the resin composition can be filled more smoothly in the slot by securing the fluidity of the resin composition, and thus it is preferred that a magnetic field having a lower intensity than the magnetic field applied to cure the resin is applied.

For example, the temperature in the preheating step, specifically, the temperature of the tubular object in the preheating step may be less than the curing onset temperature of the resin composition. In the present application, a thermosetting resin curing according to the application of heat can be applied, where the curing reaction of such a resin corresponds to an exothermic reaction, so that the curing onset temperature of the resin composition may mean a temperature that the exothermic reaction is observed when the resin composition is heated and cured. The curing onset temperature may be measured with a known measuring device, for example, a differential scanning calorimetry (DSC) device. Specifically, the curing onset temperature of the resin composition may mean a temperature that an exothermic reaction is observed when the resin composition is injected into a differential scanning calorimeter and heated from a temperature of 25°C to a temperature of 300°C at a heating rate of 10°C/min.

As described above, the preheating step may be performed in order to reduce the viscosity of the resin composition so that the composition is better filled in the slots. However, in the aspect of maintaining a state where the resin and magnetic powder are properly mixed in the composition, the viscosity of the composition needs to be appropriately adjusted as well. Therefore, in the method of the present application, the preheating of the tubular object adjusts the temperature of the tubular object, but may adjust it so that the viscosity of the resin composition at that temperature is maintained at a viscosity of more than 1/100 relative to the viscosity at room temperature. The viscosity may be measured with a known measuring device under a condition of, for example, a shear ratio of 100 s$^{-1}$.

In the present application, the term "room temperature" may mean a natural temperature without particularly warming or cooling, and may mean, for example, a temperature in the range of about 20°C to 30°C, about 23°C or about 25°C.

The preheating step is performed to more smoothly supply the resin composition into the slots, but is not performed for the curing of the composition, so that it can proceed by applying a magnetic field having a lower intensity than the magnetic field applied in the curing step of the composition.

For example, the preheating may be performed by applying a current of less than 100 A. In another example, the current may be 99 A or less, 98 A or less, 97 A or less, 96 A or less, or 95 A or less, and the lower limit is not particularly limited, which may be, as a current such that at least the tubular object can be heated, for example, 50 A or more, 60 A or more, 70 A or more, 80 A or more, 85 A or more, or 90 A or more.

In addition, the preheating may be performed with a power of less than 5000 W. The power may mean a power of a magnetic field generator to be described below. In another example, the power may be 4950 W or less, 4900 W or less, 4850 W or less, 4800 W or less, 4750 W or less, 4700 W or less, 4650 W or less, 4600 W or less, 4550 W or less, or 4500 W or less, and the lower limit is not particularly limited, which may be appropriately adjusted in the degree of power at which at least the tubular object can be heated, and may be, for example, 1000 W or more, 1500 W or more, 2000 W or more, 2500 W or more, 3000 W or more, 3500 W or more, or 4000 W or more.

In one example, the preheating may also be performed by applying a current at a frequency within the range of 100 kHz to 1000 kHz. The frequency may be 110 kHz or more, 120 kHz or more, 130 kHz or more, 140 kHz or more, or 150 kHz or more, and may be 950 kHz or less, 900 kHz or less, 850 kHz or less, 800 kHz or less, 750 kHz or less, 700 kHz or less, 650 kHz or less, or 600 kHz or less.

In one example, the preheating is performed in order to appropriately reduce the viscosity of the resin composition, and it is sufficient if it can be performed to the extent that only the viscosity of the above-described degree can be secured. Therefore, the preheating (preheating of the tubular object) may proceed within a shorter time than that of the curing (curing of the resin composition, specifically, the resin in the composition). For example, the preheating may be performed for a time below 10 minutes. Furthermore, in another example, the preheating time may be 9 minutes or less, 8 minutes or less, 7 minutes or less, 6 minutes or less, 5 minutes or less, 4 minutes or less, 3 minutes or less, 2 minutes or less, or 1 minute or less, and the lower limit is not particularly limited, which may be, for example, 10 seconds or more, 20 seconds or more, 30 seconds or more, 40 seconds or more, or 50 seconds or more.

In this way, in the present application, after heating the tubular object, a resin composition may be introduced. However, in the method of the present application, the introduction of the composition may also proceed while generating a magnetic field in the solenoid coil. As described above, if the introduction of the composition is also performed together with the generation of a magnetic field, the composition may be introduced while maintaining the temperature in the preheating step. As a result, the resin composition may be more smoothly filled in the slots. That is, when the resin composition is introduced by heating the tubular object to a predetermined temperature while generating a magnetic field in the solenoid coil, the temperature of the tubular object in the process may be within the range of ±10°C or less, ±5°C or less, ±3°C or less, or ±1°C or less based on the temperature in the preheating step.

When the introduction of the resin composition is performed together with the application of a magnetic field, the conditions for applying the magnetic field are not particularly limited, where the temperature of the tubular object in the preheating step may be appropriately adjusted within the range to be maintained within the above range. For example, it may be performed while applying a magnetic field having a lower intensity than that in the above-described preheating step for a predetermined time.

In one example, the introduction of the resin composition may be performed by applying a current of less than 50 A. The current may be 45 A or less, 40 A or less, or 35 A or less, and the lower limit is not particularly limited, which may be, as the extent that at least the temperature of the preheated tubular object nay be maintained, for example, 10 A or more, 15 A or more, 20 A or more, 25 A or more, or 30 A or more.

In one example, the introduction of the resin composition may be performed with a power of 500 W or less. The power may mean a power of a magnetic field generator to be described below. In another example, the power may be 450 W or less, 400 W or less, 350 W or less, 300 W or less, or 250 W or less, and the lower limit is not particularly limited, which may be, for example, 100 W or more, 150 W or more, 200 W or more, 210 W or more, 220 W or more, or 230 W or more.

In one example, the introduction of the resin composition may also be performed by applying a current at a frequency within the range of 100 kHz to 1000 kHz. The frequency may be 110 kHz or more, 120 kHz or more, 130 kHz or more, 140 kHz or more, or 150 kHz or more, and may be 950 kHz or less, 900 kHz or less, 850 kHz or less, 800 kHz or less, 750 kHz or less, 700 kHz or less, 650 kHz or less, or 600 kHz or less.

When a magnetic field is applied at the time of introducing the resin composition, the time for applying the magnetic field is not particularly limited as long as it is a time capable of maintaining the temperature in the preheating step. For example, the time for applying the magnetic field may be performed for a time below 10 minutes. In another example, the time for applying the magnetic field may be 9 minutes or less, 8 minutes or less, 7 minutes or less, 6 minutes or less, 5 minutes or less, 4 minutes or less, 3 minutes or less, 2 minutes or less, or 1 minute or less, and the lower limit is not particularly limited, which may be, for example, 10 seconds or more, 20 seconds or more, 30 seconds or more, 40 seconds or more, or 50 seconds or more.

The manufacturing method of the present application may further comprise a step of maintaining the temperature at the time of curing (hereinafter, also referred to as an additional temperature maintaining step in some cases) even after curing of the resin composition. That is, even after curing of the resin composition, the additional curing of the remaining resin component which does not fill the slots and is not cured may be possible by generating a magnetic field of an appropriate intensity for a predetermined period of time with the solenoid coil and maintaining the temperature at the time of curing of the resin composition. This additional curing step may be performed a plurality of times, and accordingly, the additional curing of the uncured resin component may proceed, and the cure degree of the resin in the slots may also be improved.

In one example, the additional temperature maintaining step may be performed by applying a current of less than 50 A. In another example, the current may be 45 A or less, and the lower limit is not particularly limited, which may be, as the extent that at least the temperature of the preheated tubular object may be maintained, for example, 10 A or more, 15 A or more, 20 A or more, 25 A or more, or 30 A or more.

In one example, the additional temperature maintaining step may be performed with a power of 1000 W or less. The power may mean a power of a magnetic field generator to be described below. In another example, the power may be 950 W or less, 900 W or less, 850 W or less, 800 W or less, 750 W or less, 700 W or less, 650 W or less, 600 W or less, 550 W or less, or 500 W or less, and may be 100 W or more, 150 W or more, 200 W or more, 210 W or more, 220 W or more, or 230 W or more.

In one example of the method of the present application, the additional temperature maintenance may also be performed by applying a current at a frequency within the range of 100 kHz to 1000 kHz. The frequency may be 110 kHz or more, 120 kHz or more, 130 kHz or more, 140 kHz or more, or 150 kHz or more, and may be 950 kHz or less, 900 kHz or less, 850 kHz or less, 800 kHz or less, 750 kHz or less, 700 kHz or less, 650 kHz or less, or 600 kHz or less.

The time at which the additional temperature maintaining step is performed is not particularly limited as long as it is a time capable of maintaining the temperature in the curing step. For example, the time for performing the additional temperature maintaining step may be performed for a time below 10 minutes. Furthermore, in another example, the time for per forming the additional temperature maintaining step may be 9 minutes or less, 8 minutes or less, 7 minutes or less, 6 minutes or less, 5 minutes or less, 4 minutes or less, 3 minutes or less, 2 minutes or less, or 1 minute or less, and the lower limit is not particularly limited, which may be, for example, 10 seconds or more, 20 seconds or more, 30 seconds or more, 40 seconds or more, or 50 seconds or more.

In one example, the method of introducing the resin composition into the slots is not particularly limited. For example, the resin composition may be introduced into the slots in a liquid dipping method, a solid dipping method or a trickling method. Here, the liquid dipping method may mean a method of immersing a tubular object (also including a preheated case) in a liquid resin composition and then taking it out after a predetermined period of time. In addition, the solid dipping method may mean a method of immersing the tubular object (also including a preheated case) in a container, in which a solid resin, for example, if the resin is in the form of a powder, the powder is contained, so that a curable resin is introduced into the slots. Then, the trickling method may mean a method of rotating the tubular object and simultaneously spraying a certain amount of the resin composition into the slots by using a known spraying device such as a dispenser on the rotating tubular object.

As described above, the magnetic field generated in the solenoid coil may be generated by applying an alternating current to the solenoid coil using a magnetic field generator.

In the method for producing a resin-filled object of the present application, a resin composition may be injected into the above-described slots, an alternating current may be applied to the solenoid coil by a magnetic field generator, the tubular object and the magnetic powder contained in the resin composition may be\ inductively heated by a magnetic field generated by the solenoid coil, and the resin composition may be cured by the heating, and as a result, a resin, specifically, a cured resin material may be filled in the slots.

As described above, the resin composition may comprise at least a curable (=can be cured) resin. In addition, in the apparatus of the present application, the resin can be cured by at least heating, so that it may be appropriate to apply a thermosetting resin as the curable resin.

Meanwhile, since the method of the present application is particularly suitable for an insulating process of an object, the resin of the resin composition introduced into the slots may be an insulating resin. Here, the insulating means a property that is not electrified, as in the known meaning.

In one example, the type of the thermosetting resin is not particularly limited as long as it can be cured by the application of heat, but can be exemplified by, for example, polysilicon resins; imide-based resins such as polyetherimide, polyimide or polyesterimide; polyurethane-based resins; isocyanate-based resins; acrylic resins; polyester-based resins; phthalonitrile-based resins; or a polyolefin-based resins, and the like.

The phase of the thermosetting resin is also not particularly limited. For example, the thermosetting resin may be a solid, semi-solid or liquid resin.

In addition, the resin composition may comprise a resin, specifically, a thermosetting resin as a main component. In the present application, the matter that any composition comprises any component as a main component means that the content of the component based on the total weight of the composition may be 50 wt% or more, 55 wt% or more, 60 wt% or more, 65 wt% or more, 70 wt% or more, 75 wt% or more, 80 wt% or more, 85 wt% or more, 90 wt% or more, or 95 wt% or more, and the upper limit is not particularly limited, which may be, for example, less than 100 wt%, 99 wt% or less, 98 wt% or less, or 97 wt% or less.

In the production apparatus of the present application, the resin, specifically the thermosetting resin, is cured by heat generated by the magnetic field generated by the magnetic field generator and the solenoid coil, where when the curable resin composition comprising the resin and the cured resin material formed therefrom comprise magnetic powder, it is possible to manufacture a resin-filled object in which a number of slots having a narrow area and a tight space are more effectively filled, as described above.

As the magnetic powder, a known component capable of generating vibrational heat by the magnetic field may be used without limitation. Specifically, the magnetic powder is dispersed in the resin composition with an appropriate degree of dispersion, which may be selected in consideration of the properties of the desired resin-filled object (for example, insulation properties, voltage resistance, cure degree or filling rates, etc.).

In the present application, while describing materials that can generate heat according to the application of an electromagnetic field, the terms "crystal," "magnetic particles," "magnetic body" and "magnetic powder," and the like have been used, but hereinafter, their meanings are first defined and then the specific descriptions thereof will be described.

In the present application, the term "magnetic particles" may mean particles in a form in which "crystals" representing magnetic properties are aggregated. In addition, when the magnetic particles are present together with an additional component (for example, surface treatment agent), the term "magnetic body" is applied as a meaning to distinguish the magnetic particles therefrom. In one example, an object comprising magnetic particles and a surface treatment agent introduced on the surface of the particles may be referred to as a magnetic body. In addition, the "magnetic powder" may refer to a state where one or more magnetic bodies are mixed.

That is, the resin composition applied in the present application comprises a resin and magnetic powder, where in one example, the magnetic powder may comprise one or more magnetic bodies; the magnetic body may comprise magnetic particles and a surface treatment agent introduced on the surface of the magnetic particles; and the magnetic particles may have a form in which a plurality of crystals are aggregated.

As the magnetic particles, it may be advantageous to select a plurality of crystals, specifically, multi-domain type magnetic particles in which two or more magnetic domains are formed. When the external magnetic field is not present, these magnetic particles are randomly arranged, and when the external magnetic field is applied, they can be magnetized by the direction of the applied magnetic field. Here, the meaning that magnetic domains are randomly arranged may mean a state that the magnetic directions existing in the magnetic domains are each different and are not aligned, and in this case, the net value of magnetization may be substantially close to zero and exist in a state without magnetism. When an external electromagnetic field is applied, magnetization may occur by aligning the magnetic directions of the magnetic domains. Such a magnetic particle may be a superparamagnetic particle, but is not limited thereto.

As the surface treatment agent, a polyol-based compound, a polysiloxane-based compound, an alkyl phosphoric acid-based surface treatment agent, an alkyl carboxylic acid-based surface treatment agent, an alkyl sulfonic acid-based surface treatment agent, an acid compound containing a long-chain alkyl group, an acrylic copolymer containing an acidic functional group or an amino group, an aromatic acid-based surface treatment agent, or a block copolymer containing an acidic functional group or an amino group can be selected.

It can be usually confirmed through the particle diameter of the magnetic particle whether or not the magnetic particle has a multi-domain.

For example, in the case where the magnetic particle has a particle diameter equal to or larger than the particle diameter $D_s$ satisfying the following equation 1, the magnetic particle can be considered to have a multi-domain.

[Equation 1]

$$D_s = 2\sqrt{\frac{9A}{\mu_0 M_s^2}\left[\ln\left(\frac{D_s}{a}\right) - 1\right]}$$

In Equation 1, $\mu_0$ is a magnetic permittivity constant in vacuum ($1.26 \times 10^{-6}$ H/m), Ms is saturation magnetization (unit: A/m or emu/g) of the magnetic particles, A is exchange stiffness (unit: J/m) of the magnetic particles, and a is a lattice constant (unit m) of the magnetic particles.

In Equation 1, the saturation magnetization, the exchange stiffness and the lattice constant of the magnetic particles except for the magnetic permeability constant are changed according to the specific type of magnetic particles. Therefore, after checking each of the numerical values for the magnetic particles to be applied, the size of the magnetic particles is controlled to the Ds or more obtained by substituting the numerical values into Equation 1, whereby the magnetic particles having multi-domains can be formed.

From the Ds or more usually obtained according to Equation above, the magnetic particles are subjected to multi-domains, and thus, the magnetic particles applied in the present application can have a particle diameter of at least the particle diameter Ds. Here, the upper limit of the particle diameter of the magnetic particles is not particularly limited. Usually, as the particle diameter of the magnetic particles exceeds Ds, coercive force of the corresponding magnetic particles tends to decrease, where the magnetic particles applied in the present application can have a particle diameter within a range capable of having the coercive force to be described below.

When such magnetic particles are applied, the corresponding particles may not be agglomerated and exist in a uniformly dispersed state in the composition because they act similar to absence of magnetism when no external magnetic field is present.

The corresponding magnetic particles do not generate heat by a so-called eddy current or hysteresis loss, but may be selected so that the hysteresis loss of the magnetic particles themselves is small and only the saturation magnetization value is substantially present to be capable of generating vibrational heat. For example, the magnetic particles may be selected so that the magnetic particles are vibrated by the coercive force of the magnetic particles upon application of an external electromagnetic field, thereby generating heat.

As described above, the magnetic particle may comprise two or more magnetic domains. The term "magnetic domain" generally means a region in which magnetization directions are differently divided within the magnetic particle. In the present application, magnetic particles having two or more magnetic domains are strongly magnetized by an external alternating magnetic field to generate vibrational heat, and when the magnetic field is eliminated, the magnetic particles return to the original magnetic domains, whereby magnetic particles with low residual magnetization of hysteresis loss can be provided.

In one example, the magnetic particles may have a coercive force in a range of 1 kOe to 200 kOe, 10 kOe to 150 kOe, 20 kOe to 120 kOe, 30 kOe to 100 kOe, 40 kOe to 95 kOe, or 50 kOe to 95 kOe. In another example, the coercive force may be about 10 kOe or more, 15 kOe or more, 20 kOe or more, 25 kOe or more, 30 kOe or more, 35 kOe or more, 40 kOe or more, 45 kOe or more, 50 kOe or more, 55 kOe or more, 60 kOe or more, 65 kOe or more, 70 kOe or more, 75 kOe or more, 80 kOe or more, 85 kOe or more, or 90 kOe or more, or may also be about 190 kOe or less, 180 kOe or less, 170 kOe or less, 160 kOe or less, 150 kOe or less, 140 kOe or less, 130 kOe or less, 120 kOe or less, 110 kOe or less, or 100 kOe or less. The term "coercive force" may mean an intensity of the critical magnetic field required to reduce the magnetization of the magnetic particles to zero. The magnetic particles magnetized by an external magnetic field maintain a certain degree of magnetized state even if a magnetic field is removed, where the intensity of a magnetic field capable of making the magnetization degree to zero by applying a reverse magnetic field to the magnetic particles thus magnetized is referred to as a coercive force. The coercive force of the magnetic particles may be a criterion for distinguishing soft magnetic particles or hard magnetic particles, and the magnetic particles of the present application may be soft magnetic particles. By controlling the coercive force of the magnetic particles in the above range, the present application more easily realizes the magnetization reversal of the magnetic particles to generate vibrational heat to a desired degree in the present application, so that it can satisfy a desired degree of curing physical properties by uniform curing of the resin.

In one example, the magnetic particles may have a saturation magnetization value at room temperature of 20 emu/g to 150 emu/g, 30 emu/g to 130 emu/g, 40 emu/g to 100 emu/g, 50 emu/g to 90 emu/g or 60 emu/g to 85 emu/g. In another example, the saturation magnetization value may be about 20 emu/g or more, 30 emu/g or more, 40 emu/g or more, 50 emu/g or more, 60 emu/g or more, 70 emu/g or more, or 75 emu/g or more, or may also be about 150 emu/g or less, 140 emu/g or less, 130 emu/g or less, 120 emu/g or less, 110 emu/g or less, 100 emu/g or less, or 90 emu/g or less or so. By being capable of controlling the magnetic particles to have a relatively large saturation magnetization value and thus generating heat by vibration between magnetic particles other than eddy currents, the present application can satisfy curing physical properties by uniform curing of the resin. In the present application, the measurement of physical properties of the magnetic particles can be calculated by VSM (vibrating sample magnetometer). The VSM is a device that measures magnetization values of samples by recording the applied magnetic field applied by a Hall probe and recording the electromotive force obtained on applying vibration to the sample by Faraday's law. According to Faraday's law, it can be seen that if the N pole of a bar magnet is directed and pushed towards the coil, the galvanometer moves and the current flows through the coil. The resultant current is called induction current, which was made by induced electromotive force. The VSM is a method of detecting the induced electromotive force, which occurs on vibrating a sample by such a basic operation principle, in the search coil, to measure the magnetization value of the sample by this electromotive force. The magnetic characteristics of a material can be measured simply as functions of magnetic field, temperature and time, and quick measurement in a magnetic force of up to 2 Tesla and a temperature range of 2 K to 1273 K is possible.

The characteristics such as the coercive force and the saturation magnetization value may be adjusted by characteristics related to the particle diameter of the magnetic particles. Specifically, when the magnetic particles have a crystal size to be described below and simultaneously have an average particle diameter to be described below, the magnetic body and the magnetic powder to which the magnetic particles are applied may exhibit magnetization characteristics such as the coercive force and saturation magnetization value as described above.

In one example, the average particle diameter of the magnetic particles may be in the range of 20 nm to 300 nm. In another example, the average particle diameter may be in the range of 30nm to 250nm, 40nm to 230nm, or 45nm to 220nm. In another example, the average particle diameter of the magnetic particles may be about 30nm or more, 40nm or more, 50nm or more, 60nm or more, 70nm or more, 80nm or more, 90 nm or more, or 95 nm or more, or may also be 290nm or less, 280nm or less, 270nm or less, 260nm or less, 250nm or less, 240nm or less, 230nm or less, 220nm or less, 210nm or less, 200nm or less, 190nm or less, 180nm or less, 170nm or less, 160nm or less, 150nm or less, 140nm or less, 130nm or less, 120 nm or less, or 110 nm or less or so.

The magnetic domain of the magnetic particles, specifically, the average size of the crystals of the magnetic particles may be in the range of 10 nm to 50nm, 10 nm to 40nm or 20nm to 30nm.

In the present application, heat capable of performing uniform curing of the resin in the composition may be generated by applying the magnetic powder that satisfies the range such as the particle diameter or size. The present application can generate sufficient vibrational heat on curing through a low coercive force and a large number of magnetic domains by controlling the average size of the magnetic particles to 20nm or more, and allow only the saturation magnetization value to be present while reducing hysteresis loss of the magnetic particles themselves, thereby realizing uniform and stable curing by controlling it to 300nm or less.

In the present application, the variation coefficient of the particle diameter of the magnetic particles may be adjusted to be within a specific range from the viewpoint of implementing characteristics such as the coercive force and the saturation magnetization value. Specifically, the variation coefficient of the particle diameter of the magnetic particles may be in the range of 5% to 30%. Here, the variation coefficient of any factor may mean that a ratio of the standard deviation of the factor to the mean of the factor is expressed as a percentage. That is, in the magnetic powder, the ratio of the standard deviation of the particle diameter of the magnetic particles to the mean of the particle diameter of the magnetic particles may be in the range of 5% to 30%. The variation coefficient may be estimated through electron micrographs obtained with respect to the magnetic body or the magnetic powder comprising the magnetic body.

The material of the magnetic particles of the present application is not particularly limited as long as it can generate heat through electromagnetic induction heating. In one example, the magnetic particles may be particles represented by Formula 1 below.

[Formula 1]          $MX_aO_b$

In Formula 1, M is a metal or a metal oxide, X is Fe, Mn, Co, Ni or Zn, and $|a \times c| = |b \times d|$ is satisfied, where c is the cation charge of X, and d is the anion charge of oxygen. In one example, M may be Fe, Mn, Mg, Ca, Zn, Cu, Co, Sr, Si, Ni, Ba, Cs, K, Ra, Rb, Be, Li, Y, B, or an oxide thereof. For example, when $X_aO_b$ is $Fe_2O_3$, c may be +3 and d may be -2. Also, for example, when $X_aO_b$ is $Fe_3O_4$, it can be expressed as $FeOFe_2O_3$, so that c may be +2 and +3, respectively, and d may be -2. The magnetic particles of the present application are not particularly limited as long as they satisfy Formula 1 above, and may be, for example, $MFe_2O_3$.

In one example, the composition of the present application may comprise, as magnetic particles, a compound of Formula 1 above alone, or a mixture of compounds of Formula 1 or a compound doping a compound of Formula 1 with an inorganic substance. The inorganic substance may comprise a monovalent to trivalent cationic metal or an oxide thereof, and two or more of plural cationic metals may be used.

In one example, the magnetic particles may be present in a state where the magnetic particle clusters are formed in the magnetic body. In this case, agglomeration between the magnetic particles is prevented and the dispersibility is improved, whereby the resin can be effectively cured by vibrational heat.

If necessary, the magnetic particles may also be surface-treated with an appropriate surface treatment agent in the magnetic body.

In one example, the ratio of the magnetic body in the resin composition is also not particularly limited, which may be appropriately adjusted within a range capable of securing an appropriate cure degree or filling rate of the cured resin material, and the like. The ratio may be, for example, in the range of 1 part by weight to 30 parts by weight relative to 100 parts by weight of the curable resin. In another example, the ratio may be 2 parts by weight or more, 3 parts by weight or more, 4 parts by weight or more, or 5 parts by weight or more, and may be 25 parts by weight or less, 20 parts by weight or less, 15 parts by weight or less, or 10 parts by weight or less.

As the tubular object of the production apparatus applied in the method for producing a resin-filled object of the present application, a device known as a stator for a motor may be applied. That is, in the present application, a resin-filled object in which a cured resin material is filled in slots of a stator for a motor may be manufactured.

Here, the motor is a device capable of obtaining rotational force from electric energy. For example, the motor may comprise a so-called stator and rotor, where the stator may be applied as the tubular object, and the shape of the cross section may be a ring shape. Here, the rotor is configured to electromagnetically interact with the stator, which can be rotated by force acting between the magnetic field and the current flowing in the coil.

As in the description of the tubular object, a number of slots may be formed in the stator. Wires are wound around the slot, and as each wire is connected to a lead wire, the power may be applied. As the wire wound around the slot, a general winding type wire and a hairpin winding type wire are known.

Here, the general winding method is a method in which a number of relatively thin wires are wound around a slot, and this method causes less skin effect at high speed. The hairpin winding method is a method of inserting relatively thick wires into a slot. According to the hairpin winding method, there is no waste of space between the coils, so that the space factor can be maximized and the power improvement can be expected due to resistance reduction.

Accordingly, the resin-filled object of the present application is the tubular object, which may comprise at least a stator having slots formed therein; and windings present in the slots of the stator. In addition, the stator may have a structure including steel plates stacked in a cylindrical shape and formed of a material such as iron (Fe), wherein the slots are arranged radially along the circumferential direction of the stator, but the type of the stator is not limited thereto.

Furthermore, in the present application, the type of the winding to be applied is not particularly limited. Usually, the winding is manufactured by performing insulation coating or the like on a material such as copper (Cu), and in the present application, other types of windings as well as such conventional windings can be applied. In addition, as the winding method, all types, such as the above-mentioned general winding method and hairpin winding method, can be applied.

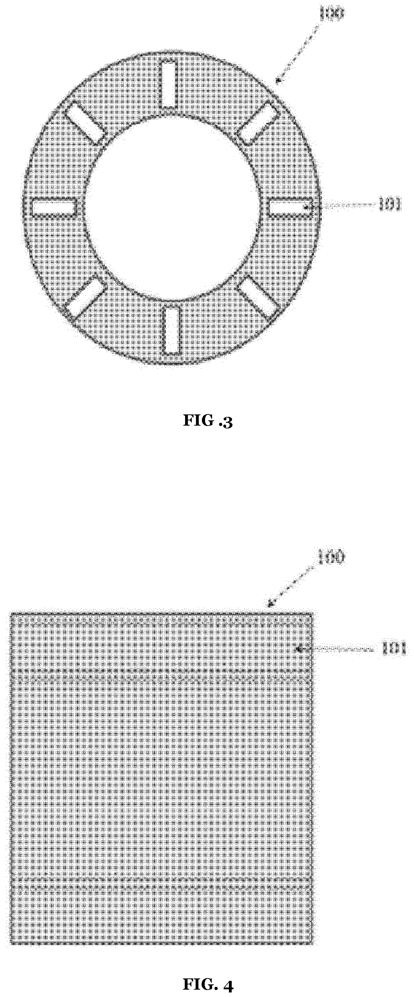

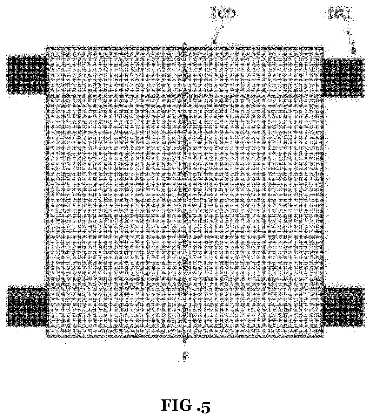

When the tubular object is the above-described stator for a motor, Figures 3 and 4 show exemplary shapes of the object. The stator illustrated in Figures 3 and 4 is the above-mentioned cylindrical stator, where Figure 3 shows a case where the stator (100) is observed in the direction of the surface in which the slots (101) are formed, and Figure 4 shows a case where the stator (100) is observed from the side. Also, Figure 5 is a side view in which the windings (102) are introduced into the slots of the stator (100) as above. For the stator for a motor, the description of the above-described tubular object may be applied as it is, so that a more detailed description will be omitted.

In addition, an insulating paper may also be injected between the slots and the resin composition during the introduction process of the resin composition into the slots of the tubular object (stator). That is, the method of the present application may further comprise a step of introducing an insulating paper into the slot before introducing the resin composition into the slots.

Accordingly, in one example, the resin cured through induction heating by the magnetic field generated by the magnetic field generator and the solenoid coil may also be an insulating cured resin material with insulation properties imparted or improved by the insulating paper.

In addition, as described above, the winding is formed on the slots, so that the method of the present application may also further comprise a step of introducing a winding into the slots before introducing an insulating paper into the slots.

In the present application, in particular, when the tubular object is a stator for a motor, all known parts of an electric motor may be generally applied to the tubular object as other elements or parts, as long as the aforementioned cured resin material has a form that fills the inside of the slots.

The present application also relates to a resin-filled object. The resin-filled object comprises a tubular object having an edge region and a resin-filled material. Also, the penetration space may be formed in the tubular object along a longitudinal direction, and one or more slots formed along the longitudinal direction may also be included inside the edge region. In addition, the resin-filled material may fill the slots. Since the resin-filled material can be formed by curing the aforementioned resin composition, the resin-filled material comprises a component (resin component) derived from the resin and magnetic powder.

The cured resin material fills the slots at an excellent filling rate. Therefore, the filling rate of the cured resin material in the slots is 90% or more. The filling rate may mean the percentage of the volume of the cured resin material present inside the slots relative to the internal volume of the slots, excluding the volume occupied by other elements (if the tubular object is a stator for a motor and the slots of the stator is wound, the winding) that may be included in addition to the cured resin material. The filling rate is not particularly limited because the higher the value is, the more advantageous it is. For example, the filling rate may be 100% or less, 99% or less, 98% or less, 97% or less, 96% or less, 95% or less, 94% or less, or 93% or less or so.

In addition, the resin-filled object of the present application may comprise a cured resin material having a high cure degree. For example, the relative cure degree of the cured resin material may be 95% or more. Here, the relative cure degree may mean a ratio (Hb/Ha) of an enthalpy (Hb) of a cured resin material to an enthalpy (Ha) of the cured resin material before curing, for example, a curable resin composition, where each enthalpy may be measured using DSC (differentiation scanning calorimetry). Since the relative cure degree is not an absolute value, its upper limit may also exceed 100%. In another example, the relative cure degree may be 95% or more, 97% or more, 99% or more, or 102% or more, and the upper limit thereof is not particularly limited, which may be, for example, 150% or less, 140% or less, 130% or less, 125% or less, 120% or less, or 115% or less.

The resin-filled object of the present application has excellent withstand voltage characteristics. For example, the resin-filled object may have a line-to-line resistance within a predetermined range, and an insulation resistance and a leakage current of a specific value or more at a specific voltage. Specifically, the resin-filled object of the present application may have a line-to-line resistance in the range of 18 mΩ to 21 mΩ. In addition, the resin-filled object of the present application may have, for example, an insulation resistance of 20 mΩ or more at 1000 V. Furthermore, the resin-filled object of the present application may have a leakage current of 20 mA or less at 1,900 V.

The methods of measuring the line-to-line resistance, insulation resistance and leakage current are known, and in the present application, they can be measured in any of the known methods. For example, with regard to the line-to-line resistance and insulation resistance, the resistance value when an AC voltage of 60 Hz and 1,000 V has been applied to the resin-filled object for about 1 minute or so can be measured using a commercially available insulation resistance meter. In addition, the leakage current means a current value leaked from the resin-filled object measured under the above conditions according to a known method using a high voltage (Hipot) tester.

In addition, the line-to-line resistance, insulation resistance and leakage current may be measured when the tubular object, wherein the edge region thereof is in a ring shape and the inside thereof is penetrated, is cylindrical. Specifically, the line-to-line resistance, insulation resistance and leakage current may be values measured when the tubular object, wherein the inside thereof is in the penetrated form, is a cylindrical object having an inner diameter of approximately 130 mm, an outer diameter of approximately 210 mm and a length of about 160 mm.

The slot has a width direction cross-sectional area in a range of 0.01 cm$^2$ to 10 cm$^2$.

In one example, the area of the opening of the slots (the area of the cut surface in the width direction) present in the edge region of the tubular object may be in the range of 0.5 cm$^2$ to 10 cm$^2$. That is, the area of the opening of the slots is considerably narrow. In addition, four or more slots are formed in the edge region, a resin-filled object having a cured resin material filled with an excellent filling rate even in a number of tight filling spaces (slots) may be produced.

In another example, the number of slots may be 2 or more, 10 or more, 15 or more, 20 or more, 30 or more, 40 or more, or 50 or more, and since the greater the number, the greater the filling amount of the cured resin material may be increased, it is not particularly limited, but may be, for example, 100 or less, 90 or less, 80 or less, 70 or less, or 64 or less. However, the number of slots varies depending on the design of the device to be insulated.

The resin-filled object of the present application is filled with the resin at an excellent filling rate even in the narrow and tight slots as above.

The resin-filled object of the present application may be produced by the above-described production method. Accordingly, all of the contents described in the above production method are also applied to the contents of the resin-filled object as they are.

For example, as described above, the tubular object may be a stator for a motor or a transformer. Specifically, the tubular object may be a stator for a direct current drive or alternating current drive motor. Accordingly, in the slots of the stator for the motor, an insulating paper may be introduced between the precursor (resin composition) of the resin-filled material and the inner wall of the slots, and as a result, in the resin-filled object, the resin-filled material may be an insulating resin-filled material.

In another example, when a winding is introduced into the slots and a part of the winding is damaged by an external impact, the insulation properties of the resin-filled object may be maintained by applying a powdery resin as the resin.

**Advantageous Effects**

The method of the present application can fill a curable resin with a high filling rate even in a filling part having a narrow area.

The method of the present application can fill a resin even in a filling part having a narrow area so as to have excellent hardness and simultaneously have excellent insulating characteristics.

The method of the present application can perform the above filling in a short time.

The resin-filled object of the present application has a resin filled at an excellent filling rate even in a filling part having a narrow area, while having excellent hardness and insulating characteristics.

**Description of Drawings**

Figure 1 is a schematic diagram of a tubular object applied in the method of the present application.

Figure 2 is an exemplary cross-sectional view of a tubular object applied in the method of the present application.

Figures 3 to 5 show examples of tubular objects.

**Best Mode**

Hereinafter, the present application will be described in detail through examples. However, the scope of the present application is not limited by the following examples.

1. **Relative cure degree measurement**

The enthalpy (Hb) of each resin-filled object produced in Examples and Comparative Examples and the enthalpy (Ha) of the curable resin composition before curing were measured using DSC, and then the ratio (Hb/Ha) was converted into the percentage to be described as the relative cure degree.

**2. Filling rate measurement**

The filling rate was determined by cutting each resin-filled object produced in Examples and Comparative Examples in a direction perpendicular to the longitudinal direction, and then confirming the amount of the cured resin material filled in the slots, and obtaining the percentage of the volume of the cured resin material relative to the volume inside the total slots.

**3. Evaluation of withstand voltage characteristics**

The line-to-line resistance, insulation resistance and leakage current of each resin-filled object produced in Examples and Comparative Examples were measured, where it was evaluated as Pass only when it had the line-to-line resistance in the range of 18 m$\Omega$ to 21 m$\Omega$, the insulation resistance of 20 m$\Omega$ or more at 1000 V and the leakage current of 20 mA or less at 1900 V, and otherwise, it was evaluated as Fail.

Specifically, the line-to-line resistance and insulation resistance are resistances measured by applying an alternating current voltage of 60 Hz and 1,000 V to the resin-filled object for about 1 minute or so and then using a known insulation resistance meter. In addition, the leakage current is the value of the leakage current when a voltage of 1,900 V has been applied in a known manner using a high voltage (HIPOT) tester.

**4. Evaluation of thermal shock characteristics**

The resin-filled objects produced in Examples and Comparative Examples were each introduced into a commercially available constant-temperature/alternating-temperature bath. Then, a thermal shock was applied to the resin-filled object by a method of repeating the process of raising the temperature of the constant-temperature/alternating-temperature bath from -30°C to 180°C approximately 300 times or so. At this time, the number of cracks in the resin-filled object (crack number, unit: ea) and the number of times that the cured resin material was peeled (peel-off number, unit: ea) were measured.

**Preparation Example 1. Resin composition**

A curable resin composition was prepared by mixing 100 parts by weight of an epoxy resin (a mixture that Kukdo Chemical YD128 and Nadic Anhydride were mixed in a weight ratio of 60:40) and 5 parts by weight of magnetic particles. Here, a liquid epoxy resin was used as the epoxy resin. In addition, $Fe_3O_4$ particles were used as the magnetic particles. The magnetic particles had an average particle diameter of about 100 nm, a coercive force of about 94 kOe and a saturation magnetization value of about 80 emu/g or so when measured by FESEM (field effect scanning electron microscope) and DLS (dynamic light scattering). Here, the coercive force and the saturation magnetization value were measured under an external magnetic field of 1 Tesla to a vibrating sample magnetometer (SQUID-VSM, Korea Basic Science Institute) using an H-S curve (VSM curve).

**Preparation Example 2. Resin composition**

A curable resin composition was prepared in the same manner as in Preparation Example 1, except that a solid epoxy resin (3M, Scotchcast 255) was applied as the epoxy resin.

**Preparation Example 3. Resin composition**

A curable resin composition was prepared in the same manner as in Preparation Example 1, except that magnetic particles were not mixed.

**Example 1. Production of resin-filled object**

A cylinder-shaped stator for a motor as shown in Figure 3 (having an inner diameter of about 130 mm, an outer diameter of about 210 mm and a total length of 160 mm) was prepared. As shown in Figure 3, the slots were formed radially in the stator, and the openings had a rectangular shape with a horizontal length of approximately 5 mm or so and a vertical length of about 20 mm or so. As shown in Figure 5, windings (102, copper wire) were introduced into the slots. As the winding, one having a circular cross section with a diameter of about 4.5 mm or so was used, and 5 windings were introduced per slot.

A solenoid coil electrically connected to a magnetic field generator was inserted in the penetration space formed in the stator for the motor, and an alternating magnetic field of a power of about 4500 W, a frequency of about 307 kHz and 95 A was applied thereto for approximately 1 minute with the magnetic field generator to preheat the stator until the temperature of the stator reached approximately 60°C or so (preheating step).

After preheating the stator, the curable resin composition according to Preparation Example 1 was injected into the slots of the stator using a known nozzle. In order to maintain the temperature of the preheated stator at approximately 60°C or so, the injection of the curable resin composition was performed by applying an alternating magnetic field of a power of about 230 W, a frequency of about 306 kHz and 35 A for approximately 5 minutes with the magnetic field generator (resin composition introduction step).

Thereafter, the stator was heated until the temperature of the stator reached approximately 150°C or so by applying an alternating magnetic field of a power of about 8000 W, a frequency of about 306 kHz and 125 A for approximately 10 minutes with the magnetic field generator to produce a cured resin material (curing step).

Additionally, in order to maintain the temperature in the curing step, an alternating magnetic field of a power of about 500 W, a frequency of about 305 kHz and 45 A was applied thereto for about 7 minutes with the magnetic field generator to produce a resin-filled object.

**Example 2-Production of resin-filled object**

A resin-filled object was produced in the same manner as in Example 1, except that in the curing step, an alternating magnetic field of a power of about 9,800 W, a frequency of about 305 kHz and 130 A was applied thereto for approximately 5 minutes with the magnetic field generator to heat the stator until the temperature of the stator reached about 170°C or so.

**Example 3. Production of resin-filled object**

Using the same stator for a motor as prepared in Example 1, a resin-filled object was produced.

A solenoid coil electrically connected to a magnetic field generator was inserted in the penetration space formed in the stator for the motor, and an alternating magnetic field of a power of about 4500 W, a frequency of about 307 kHz and 95 A was applied thereto for approximately 1 minute with the magnetic field generator to preheat the stator until the temperature of the stator reached approximately 130°C or so (preheating step).

The preheated stator was immersed in the curable resin composition of Preparation Example 2 for about 1 minute by a conveying means, and then taken out, so that the curable resin composition of Preparation Example 2 was injected into the slots of the stator. Thereafter, the stator was heated until the temperature of the stator reached approximately 150°C or so by applying an alternating magnetic field of a power of about 8000 W, a frequency of about 306 kHz and 125 A for approximately 10 minutes with the magnetic field generator to produce a resin-filled object.

Then, a cured resin material was produced by generating a magnetic field with the magnetic field generator and heating the stator until the temperature of the stator reached approximately 150°C or so.

Additionally, in order to maintain the temperature in the curing step, an alternating magnetic field of a power of about 500 W, a frequency of about 305 kHz and 45 A was applied thereto for about 7 minutes with the magnetic field generator to produce a resin-filled object.

**Comparative Example 1. Production of resin-filled object**

A resin-filled object was produced in the same manner as in Example 1, except that the curable resin composition of Preparation Example 3 was applied as the curable resin composition.

**Comparative Example 2. Production of resin-filled object**

Using the same stator for a motor as prepared in Example 1, a resin-filled object was produced.

Specifically, heat was applied to an oven for about 30 minutes, and the stator for the motor was preheated to a temperature of 60°C or so.

After preheating the stator, the curable resin composition according to Preparation Example 1 was injected into the slots of the stator using a known nozzle.

Then, the stator was heat-treated in the oven heated to approximately 150°C or so for 40 minutes to produce a resin-filled object (curing step).

**Comparative Example 3. Resin-filled object**

A resin-filled object was produced in the same manner as in Comparative Example 1, except that in the curing step, the stator was heat-treated for 40 minutes in the oven heated to approximately 170°C.

**Comparative Example 4. Resin-filled object.**

A resin-filled object was produced in the same manner as in Comparative Example 1, except that the curable resin composition according to Preparation Example 3 was injected.

**Comparative Example 5. Resin-filled object**

A resin-filled object was produced in the same manner as in Comparative Example 1, except that the curable resin composition according to Preparation Example 2 was injected, and the stator was heat-treated for about 30 minutes in the oven heated to 130°C or so.

The physical properties of the resin-filled objects produced in Examples 1 to 3 and Comparative Examples 1 to 5 were evaluated and shown in Table 1 below.

[Table 1]

| | | Curing time (min) | Relative cure degree (%) | Filling rate (%) | Thermal shock resistance | | Withstand voltage characteristics (P/F) |
|---|---|---|---|---|---|---|---|
| | | | | | Crack number (EA) | Peel-off number (EA) | |
| Example | 1 | 10 | 105 | 90 | 1 | 0 | P |
| | 2 | 5 | 112 | 94 | 2 | 0 | P |
| | 3 | 5 | 102 | - | 3 | 2 | - |

(continued)

| | | Curing time (min) | Relative cure degree (%) | Filling rate (%) | Thermal shock resistance | | Withstand voltage characteristics (P/F) |
|---|---|---|---|---|---|---|---|
| | | | | | Crack number (EA) | Peel-off number (EA) | |
| Comparative Example | 1 | 10 | 83 | 88 | 10 | 5 | F1 |
| | 2 | 40 | 92 | 82 | 12 | 4 | F2 |
| | 3 | 40 | 97 | 81 | 8 | 2 | P |
| | 4 | 40 | 94 | 78 | 14 | 6 | F3 |
| | 5 | 40 | 98 | - | 6 | 4 | - |

P: Pass

F1: The line-to-line resistance of 16 mΩ did not satisfy withstand voltage characteristics

F2: Sparks occurred at a voltage of 600 V

F3: Smoke and sparks occurred at 550 V, thereby stopping the measurement

In Examples 1 to 2 using the curable resin composition and method specified in the present application, it can be confirmed that the resin-filled objects having a high filling rate and a relative cure degree, and excellent thermal shock resistance and withstand voltage characteristics can be produced within a short time. However, in Example 3 and Comparative Example 5, the resin composition of Preparation Example 2 is not a liquid form, but a mixed powder, which is applied only to the winding exposed from the slots, so that it is difficult to directly check the filling rate and withstand voltage characteristics, but it can be confirmed at least that the rapid curing is possible in that Example 3 (magnetic powder applied) compared to Comparative Example 5 (no magnetic powder applied) has a short curing time.

Meanwhile, in the case of Comparative Example 1 in which the method applied in the present application has been applied, but a curable resin composition containing no magnetic material is applied, the resin-filled object can be produced within a short time, but there is a problem that its cure degree, filling rate, thermal shock resistance and withstand voltage characteristics are poor.

Then, in the case of Comparative Examples 2 to 5 in which the oven heating method has been applied rather than the method applied in the present application, it can be seen that the cured resin material cannot be filled in the slots with an excellent filling rate, despite its long curing time.

{Explanation of Reference Numerals}

1: edge region

2: penetration space

3: slot of edge region

10: tubular object

100: stator for motor

101: slot of stator

102: winding in slot

**Claims**

1. A method for producing a resin-filled object using a tubular object (10) comprising a penetration space (2) formed in a longitudinal direction and an edge region (1) having slots (3; 101) formed in the longitudinal direction therein,

wherein the method for producing a resin-filled object comprises steps of: introducing a resin composition including a resin and magnetic powder into the slots (3; 101);
inserting a solenoid coil into the penetration space (2) of the tubular object (10) that the resin composition is introduced into the slots (3; 101); and
generating a magnetic field with the solenoid coil to cure the resin.

2. The method for producing a resin-filled object according to claim 1,
wherein the resin is an insulating resin.

3. The method for producing a resin-filled object according to claim 1,

wherein the magnetic powder comprises one or more magnetic bodies, and
the magnetic body comprises magnetic particles and a surface treatment agent introduced onto the surface of the magnetic particles.

4. The method for producing a resin-filled object according to claim 3,

wherein the magnetic particles have an average particle diameter in a range of 20 nm to 300 nm, and
the magnetic particles have a crystal size in a range of 10 nm to 40 nm.

5. The method for producing a resin-filled object according to claim 3,
wherein the surface treatment agent is a polyol-based compound, a polysiloxane-based compound, an alkyl phosphoric acid-based surface treatment agent, an alkyl carboxylic acid-based surface treatment agent, an alkyl sulfonic acid-based surface treatment agent, an acid compound containing a long-chain alkyl group, an acrylic copolymer containing an acidic functional group or an amino group, an aromatic acid-based surface treatment agent, or a block copolymer containing an acidic functional group or an amino group.

6. The method for producing a resin-filled object according to claim 3,
wherein the magnetic particles have a variation coefficient of a particle diameter in a range of 5% to 30%.

7. The method for producing a resin-filled object according to claim 1,
further comprising a step of introducing an insulating paper into the slots (3; 101) before introducing the resin composition into the slots (3; 101), and further comprising a step of introducing a winding into the slots (3; 101) before introducing the insulating paper into the slots (3; 101).

8. The method for producing a resin-filled object according to claim 1,
further comprising a step of inserting the solenoid coil into the penetration space (2) of the tubular object (10) before introducing the resin composition into the slots (3; 101), and then generating a magnetic field with the solenoid coil to preheat the tubular object (10).

9. The method for producing a resin-filled object according to claim 8,
wherein in the preheating of the tubular object (10), the temperature of the tubular object (10) is adjusted to be less than the curing onset temperature of the resin composition.

10. The method for producing a resin-filled object according to claim 8,
wherein in the preheating of the tubular object (10), the temperature of the tubular object (10) is adjusted, but the viscosity of the resin composition at that temperature is adjusted to maintain a viscosity of more than 1/100 relative to the viscosity at room temperature.

11. The method for producing a resin-filled object according to claim 8,
wherein the introduction of the resin composition is performed while generating a magnetic field with the solenoid coil.

12. The method for producing a resin-filled object according to claim 1,

wherein the introduction of the resin composition is performed by a liquid dipping method, a solid dipping method or a trickling method, or
wherein the resin is cured by applying an alternating current to the solenoid coil using a magnetic field generator to generate a magnetic field.

**13.** A resin-filled object comprising a tubular object (10) including a penetration space formed in a longitudinal direction and an edge region (1) having slots (3; 101) formed in the longitudinal direction therein; and a resin-filled material that fills the interior of the slots (3; 101) and includes a resin component and magnetic powder, wherein:

a filling rate of the resin-filled material in the slots is 90% or more,
a line-to-line resistance of the resin-filled object is in a range of 18 mΩ to 21 mΩ,
an insulation resistance of the resin-filled object at 1000 V is 20 mΩ or more, and
a leakage current of the resin-filled object at 1,900 V is 20 mA or less.

**14.** The resin-filled object of claim 13, wherein the slots (3; 101) each have a width direction cross-sectional area in a range of 0.01 cm$^2$ to 10 cm$^2$.

**15.** The resin-filled object according to claim 13, wherein 2 to 100 slots (3; 101) are present in the edge region (1).

**Patentansprüche**

**1.** Verfahren zum Herstellen eines harzgefüllten Objekts unter Verwendung eines rohrförmigen Objekts (10), das einen in einer Längsrichtung ausgebildeten Durchdringungsraum (2) und einen Randbereich (1) mit darin in der Längsrichtung ausgebildeten Schlitzen (3; 101) umfasst,

wobei das Verfahren zum Herstellen eines harzgefüllten Objekts die folgenden Schritte umfasst: Einführen einer Harzzusammensetzung, die ein Harz und magnetisches Pulver enthält, in die Schlitze (3; 101);
Einführen einer Solenoidspule in den Durchdringungsraum (2) des rohrförmigen Objekts (10), so dass die Harzzusammensetzung in die Schlitze (3; 101) eingeführt wird; und
Erzeugen eines Magnetfelds mit der Solenoidspule, um das Harz zu härten.

**2.** Verfahren zum Herstellen eines harzgefüllten Objekts nach Anspruch 1,
wobei das Harz ein isolierendes Harz ist.

**3.** Verfahren zum Herstellen eines harzgefüllten Objekts nach Anspruch 1,

wobei das magnetische Pulver einen oder mehrere magnetische Körper enthält, und
der magnetische Körper magnetische Teilchen und ein Oberflächenbehandlungsmittel enthält, das auf die Oberfläche der magnetischen Teilchen eingeführt wird.

**4.** Verfahren zum Herstellen eines harzgefüllten Objekts nach Anspruch 3,

wobei die magnetischen Teilchen einen mittleren Teilchendurchmesser in einem Bereich von 20 nm bis 300 nm aufweisen, und
die magnetischen Teilchen eine Kristallgröße in einem Bereich von 10 nm bis 40 nm aufweisen.

**5.** Verfahren zum Herstellen eines harzgefüllten Objekts nach Anspruch 3,
wobei das Oberflächenbehandlungsmittel eine Verbindung auf Polyolbasis, eine Verbindung auf Polysiloxanbasis, ein Oberflächenbehandlungsmittel auf Alkylphosphorsäurebasis, ein Oberflächenbehandlungsmittel auf Alkylcarbonsäurebasis, ein Oberflächenbehandlungsmittel auf Alkylsulfonsäurebasis, eine Säureverbindung, die eine langkettige Alkylgruppe enthält, ein Acrylcopolymer, das eine saure funktionelle Gruppe oder eine Aminogruppe enthält, ein Oberflächenbehandlungsmittel auf aromatischer Säurebasis oder ein Blockcopolymer, das eine saure funktionelle Gruppe oder eine Aminogruppe enthält, ist.

**6.** Verfahren zum Herstellen eines harzgefüllten Objekts nach Anspruch 3,
wobei die magnetischen Teilchen einen Variationskoeffizienten eines Teilchendurchmessers in einem Bereich von 5 % bis 30 % aufweisen.

**7.** Verfahren zum Herstellen eines harzgefüllten Objekts nach Anspruch 1,
ferner umfassend einen Schritt des Einführens eines isolierenden Papiers in die Schlitze (3; 101) vor dem Einführen der Harzzusammensetzung in die Schlitze (3; 101), und ferner umfassend einen Schritt des Einführens einer Wicklung in die Schlitze (3; 101) vor dem Einführen des isolierenden Papiers in die Schlitze (3; 101).

8. Verfahren zum Herstellen eines harzgefüllten Objekts nach Anspruch 1,
ferner umfassend einen Schritt des Einführens der Solenoidspule in den Durchdringungsraum (2) des rohrförmigen Objekts (10) vor dem Einführen der Harzzusammensetzung in die Schlitze (3; 101), und dann Erzeugen eines Magnetfelds mit der Solenoidspule, um das rohrförmige Objekt (10) vorzuwärmen.

9. Verfahren zum Herstellen eines harzgefüllten Objekts nach Anspruch 8,
wobei beim Vorwärmen des rohrförmigen Objekts (10) die Temperatur des rohrförmigen Objekts (10) so eingestellt wird, dass sie niedriger ist als die Härtungsbeginntemperatur der Harzzusammensetzung.

10. Verfahren zum Herstellen eines harzgefüllten Objekts nach Anspruch 8,
wobei beim Vorwärmen des rohrförmigen Objekts (10) die Temperatur des rohrförmigen Objekts (10) eingestellt wird, aber die Viskosität der Harzzusammensetzung bei dieser Temperatur so eingestellt wird, dass eine Viskosität von mehr als 1/100 relativ zur Viskosität bei Raumtemperatur aufrechterhalten wird.

11. Verfahren zum Herstellen eines harzgefüllten Objekts nach Anspruch 8,
wobei das Einführen der Harzzusammensetzung durchgeführt wird, während ein Magnetfeld mit der Solenoidspule erzeugt wird.

12. Verfahren zum Herstellen eines harzgefüllten Objekts nach Anspruch 1,

wobei das Einführen der Harzzusammensetzung durch ein Flüssigkeitstauchverfahren, ein Feststofftauchverfahren oder ein Rieselverfahren durchgeführt wird, oder
wobei das Harz durch Anlegen eines Wechselstroms an die Solenoidspule unter Verwendung eines Magnetfeldgenerators gehärtet wird, um ein Magnetfeld zu erzeugen.

13. Harzgefülltes Objekt, umfassend ein rohrförmiges Objekt (10), das einen in einer Längsrichtung ausgebildeten Durchdringungsraum und einen Randbereich (1) mit darin in der Längsrichtung ausgebildeten Schlitzen (3; 101) umfasst; und ein harzgefülltes Material, das das Innere der Schlitze (3; 101) füllt und eine Harzkomponente und magnetisches Pulver umfasst, wobei:

eine Füllrate des harzgefüllten Materials in den Schlitzen 90 % oder mehr beträgt,
ein Linie-zu-Linie-Widerstand des harzgefüllten Objekts in einem Bereich von 18 m$\Omega$ bis 21 m$\Omega$ liegt,
ein Isolationswiderstand des harzgefüllten Objekts bei 1000 V 20 m$\Omega$ oder mehr beträgt, und
ein Leckstrom des harzgefüllten Objekts bei 1.900 V 20 mA oder weniger beträgt.

14. Harzgefülltes Objekt nach Anspruch 13, wobei die Schlitze (3; 101) jeweils eine Querschnittsfläche in Breitenrichtung in einem Bereich von 0,01 cm$^2$ bis 10 cm$^2$ aufweisen.

15. Harzgefülltes Objekt nach Anspruch 13, wobei 2 bis 100 Schlitze (3; 101) in dem Randbereich (1) vorhanden sind.

**Revendications**

1. Procédé de production d'un objet chargé de résine en utilisant un objet tubulaire (10) comprenant un espace de pénétration (2) formé dans une direction longitudinale et une région de bord (1) ayant des fentes (3 ; 101) qui y sont formées dans la direction longitudinale,
dans lequel le procédé de production d'un objet chargé de résine comprend les étapes consistant à :

introduire une composition de résine incluant une résine et une poudre magnétique dans les fentes (3 ; 101) ;
insérer une bobine de solénoïde dans l'espace de pénétration (2) de l'objet tubulaire (10) où la composition de résine est introduite dans les fentes (3 ; 101) ; et
générer un champ magnétique avec la bobine de solénoïde pour durcir la résine.

2. Procédé de production d'un objet chargé de résine selon la revendication 1,
dans lequel la résine est une résine isolante.

3. Procédé de production d'un objet chargé de résine selon la revendication 1,

dans lequel la poudre magnétique comprend un ou plusieurs corps magnétiques, et
le corps magnétique comprend des particules magnétiques et un agent de traitement de surface introduit sur la surface des particules magnétiques.

4. Procédé de production d'un objet chargé de résine selon la revendication 3,

dans lequel les particules magnétiques ont un diamètre de particule moyen dans une plage de 20 nm à 300 nm, et les particules magnétiques ont une dimension de cristal dans une plage de 10 nm à 40 nm.

5. Procédé de production d'un objet chargé de résine selon la revendication 3,
dans lequel l'agent de traitement de surface est un composé à base de polyol, un composé à base de polysiloxane, un agent de traitement de surface à base d'acide alkylphosphorique, un agent de traitement de surface à base d'acide alkylcarboxylique, un agent de traitement de surface à base d'acide d'alkylsulfonique, un composé acide contenant un groupe alkyle à chaîne longue, un copolymère acrylique contenant un groupe fonctionnel acide ou un groupe amino, un agent de traitement de surface à base d'acide aromatique ou un copolymère séquencé contenant un groupe fonctionnel acide ou un groupe amino.

6. Procédé de production d'un objet chargé de résine selon la revendication 3,
dans lequel les particules magnétiques ont un coefficient de variation d'un diamètre de particule dans une plage de 5 % à 30 %.

7. Procédé de production d'un objet chargé de résine selon la revendication 1,
comprenant en outre une étape consistant à introduire un papier isolant dans les fentes (3 ; 101) avant d'introduire la composition de résine dans les fentes (3 ; 101) et comprenant en outre une étape consistant à introduire un enroulement dans les fentes (3 ; 101) avant d'introduire le papier isolant dans les fentes (3 ; 101).

8. Procédé de production d'un objet chargé de résine selon la revendication 1,
comprenant en outre une étape consistant à insérer la bobine de solénoïde dans l'espace de pénétration (2) de l'objet tubulaire (10) avant d'introduire la composition de résine dans les fentes (3 ; 101), puis à générer un champ magnétique avec la bobine de solénoïde pour préchauffer l'objet tubulaire (10).

9. Procédé de production d'un objet chargé de résine selon la revendication 8,
dans lequel dans le préchauffage de l'objet tubulaire (10), la température de l'objet tubulaire (10) est ajustée pour être inférieure à la température de début de durcissement de la composition de résine.

10. Procédé de production d'un objet chargé de résine selon la revendication 8,
dans lequel dans le préchauffage de l'objet tubulaire (10), la température de l'objet tubulaire (10) est ajustée, mais la viscosité de la composition de résine à cette température est ajustée pour maintenir une viscosité égale ou supérieure à 1/100 par rapport à la viscosité à température ambiante.

11. Procédé de production d'un objet chargé de résine selon la revendication 8,
dans lequel l'introduction de la composition de résine est effectuée pendant qu'un champ magnétique est généré avec la bobine de solénoïde.

12. Procédé de production d'un objet chargé de résine selon la revendication 1,

dans lequel l'introduction de la composition de résine est effectuée par un procédé d'immersion liquide, un procédé d'immersion solide ou un procédé de ruissellement, ou
dans lequel la résine est durcie en appliquant un courant alternatif à la bobine de solénoïde en utilisant un générateur de champ magnétique pour générer un champ magnétique.

13. Objet chargé de résine comprenant un objet tubulaire (10) incluant un espace de pénétration formé dans une direction longitudinale et une région de bord (1) ayant des fentes (3 ; 101) qui y sont formées dans la direction longitudinale ; et un matériau chargé de résine qui remplit l'intérieur des fentes (3 ; 101) et inclut un composant de résine et poudre magnétique, dans lequel :

un taux de remplissage du matériau chargé de résine dans les fentes est égal ou supérieur à 90 %,
une résistance de ligne à ligne de l'objet chargé de résine est dans une plage de 18 mΩ à 21 mΩ,

une résistance d'isolement de l'objet chargé de résine à 1000 V est égale ou supérieure à 20 mΩ, et
un courant de fuite de l'objet chargé de résine à 1900 V est égal ou inférieur à 20 mA.

14. Objet chargé de résine selon la revendication 13, dans lequel les fentes (3 ; 101) ont chacune une zone transversale dans la direction de la largeur dans une plage de 0,01 cm$^2$ à 10 cm$^2$.

15. Objet chargé de résine selon la revendication 13, dans lequel 2 à 100 fentes (3 ; 101) sont présentes dans la région de bord (1)

**FIG. 1**

**FIG. 2**

**FIG .3**

**FIG. 4**

FIG .5

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190083975
- KR 1020190158213
- KR 1020190158214